# EUROPEAN PATENT APPLICATION

(11) **EP 1 947 816 A1**
(43) Date of publication of application: **23.07.2008**
(21) Application number: 06805122.6
(22) Date of filing: 31.10.2006
(51) Int. Cl.: H04L 12/66

(54) **A GATE CONTROL METHOD FOR MEDIA GATEWAY**

(30) Priority: 11.11.2005 CN 200510101136
(71) Applicant: Huawei Technologies Co., Ltd., Longgang District, Shenzhen Guangdong 518129 (CN)
(72) Inventor: LIN, Yangbo, Guangdong 518129 (CN)
(74) Representative: Hengelhaupt, Jürgen
(86) International application number: PCT/CN2006/002921
(87) International publication number: WO 2007/054012

(57) **Abstract**

A gate control method for media gateway, mainly comprises: a media gateway controller transfers a gate control information by which a media stream of the media gateway is gated to a media gateway; the corresponding media stream through the media gateway is gated by the media gateway according the said gate control information. The present invention can implement the control of a media stream of a media gateway, and improve the service quality and safety of the network.

## Description

This application claims the priority of the Chinese patent application No. 200510101136.2, submitted to the Chinese Patent Office on Nov. 11, 2005, titled "Gate Control Method of Media gateway", the entire content of which is incorporated herein by reference.

### Field of the Invention

The disclosure relates to the field of communications technology, and in particular, to the control technology of the media gateway. More specifically, the disclosure relates to a gate control method of the media gateway.

### Background of the Invention

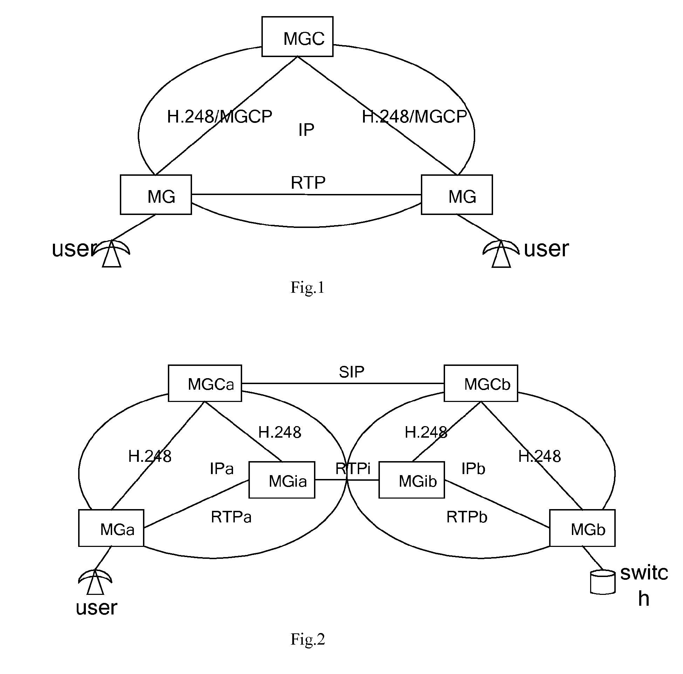

In the next generation network (NGN), demand for the separation of controlling and bearing in the network results directly in the development of the control technology of the media gateway. Referring to Fig. 1, which is the schematic diagram of media gateway control in the prior art, devices for the media gateway control in the NGN primarily include the media gateway controller (MGC) and the media gateway (MG); the MGC deals with the function of call controlling and the MG deals with the function of service bearing, so as to realize the separation of the call controlling plane and the service bearing plane, thus completely sharing network resource, simplifying device upgrade and service extension, and significantly cutting the cost for development and maintenance.

The media gateway control protocol is the major protocol for communication between the MG and the MGC, and two protocols are now widely used: H.248/MeGaCo (Gateway Control Protocol) and MGCP (Media Gateway Control Protocol), among which the MGCP protocol version 1 was instituted in Oct. 1999 by IETF and revised in Jan. 2003, the H.248/MeGaCo protocol version 1 was instituted in Nov. 2000 by IETF and ITU cooperatively and revised in June 2003, the H.248 protocol version 2 was instituted in May 2002 by ITU and revised in Mar. 2004, and the H.248 protocol version 3 was instituted in July 2005 by ITU and is yet to be published.

Take the H.248 protocol as an example, various resources on the MG are abstractively expressed as the Termination. The Termination is further classified into Physical Termination and Ephemeral Termination, with the Physical Termination representing some semi-permanent existing physical entities such as the TDM channel, etc., and the Ephemeral Termination representing some public resources which are applied temporarily and released after being used, such as the RTP stream, etc. Combinations among the Terminations are abstractively expressed as the Context. The Context may include multiple Terminations, and the inter-relationship between the Terminations is described by Topology. As to the Termination which has no relations with other Terminations yet, it may be included in a special context called Null Context.

Referring to Fig. 2, under the control of MGC, MG is in charge of the conversion and transfer of the media stream between the user and the packet-based network as well as between the packet-based network of different domains. In the specific application, the access media gateway may perform the conversion and transfer of the media between the POTS users and the RTP stream, the trunk media gateway may perform the conversion and transfer of the media between the TDM relay and the RTP stream, and the packet media gateway may perform the conversion and transfer of the media between the RTP streams.

Generally, in the aforementioned packet-based network, any one of the media streams between the MGs has such fundamental features as the source address, source port, destination address, destination port and protocol type. In consideration of quality of service and security, it is necessary to control the media stream passing through MG. For example, it is necessary to enable or disable the reception of the importing media streams from the designated source address and port. For another example, it is necessary to enable or disable the exporting media streams sent from the designated source address and port. In other words, it is necessary to perform gate control to the media stream received and sent by the MG.

### Summary of the Invention

It is an object of the disclosure to provide a gate control method of the media gateway, to realize the control of the media stream on the media gateway, so as to improve the quality of service and security of the network.

The disclosure provides, in an embodiment, a gate control method of the media gateway, including:
receiving, gate control information for gate controlling media streams of a media gateway from a media gateway controller;
performing gate control to the media streams passing through the media gateway according to the gate control information.

The gate control information includes a media stream filtering rule for performing gate control to the media streams passing through the media gateway, and a media stream source/destination address, a source/destination port and protocol type information needed when performing filtering according to the media stream filtering rule.

The media stream filtering rule includes a media gateway importing direction media stream filtering rule and/or a media gateway exporting direction media stream filtering rule.

More appropriately, the media gateway importing direction media stream filtering rule comprises at least one of the following rules:
enabling or disabling filtering of the importing direction media streams according to the source address;
enabling or disabling filtering of the importing direction media streams according to the source port;
enabling or disabling filtering of the importing direction media streams according to the destination address;
enabling or disabling filtering of the importing direction media streams according to the destination port; and
enabling or disabling filtering of the importing direction media streams according to the protocol type.

More appropriately, the media gateway exporting direction media stream filtering rule comprises at least one of the following rules:
enabling or disabling filtering of the exporting direction media streams according to the source address;
enabling or disabling filtering of the exporting direction media streams according to the source port;
enabling or disabling filtering of the exporting direction media streams according to the destination address;
enabling or disabling filtering of the exporting direction media streams according to the destination port; and
enabling or disabling filtering of the exporting direction media streams according to the protocol type.

A relation of the combination of the respective rules is either "AND" or "OR".

A filtering mode of the combination of the rules for performing the gate control of the media stream is to enable or disable the media stream conforming to the combination of the filtering rules to pass or from passing.

The media stream filtering rule and the media stream source/destination address, source /destination port and protocol type information needed when performing filtering according to the media stream filtering rule are carried by Property parameters of the H.248 protocol or the MGCP protocol and sent to the media gateway by the media gateway controller.

If the gate control performed to the media stream on the media gateway fails, the media gateway returns corresponding failure information to the media gateway controller.

The failure information is sent to the media gateway controller through the Error Code of the H.248 protocol or the MGCP protocol.

In the gate control of the disclosure, the media gateway controller sends to the media gateway the gate control information for gate controlling the media streams of this media gateway, and the media gateway performs gate control to the corresponding media streams passing through the media gateway according to the gate control information, thus providing an effective solution for the media gateway controller to dynamically perform the complete gate control of the media streams on various media gateway, thereby satisfying the actual requirement on the quality of service and security of the network.

### Brief Description of the Drawings

Fig. 1 is a schematic diagram of the media gateway control of the prior art;
Fig. 2 is a schematic diagram of the media gateway controller controlling the media gateway to perform the media conversion and transfer of the prior art.

### Detailed Description of the Embodiments

The core concept of the disclosure is that, when gate control is performed to the media streams on the media gateway, the media gateway controller sends to the media gateway the gate control information which is used to gate control the media streams of this media gateway; the media gateway performs gate control to the corresponding media streams passing through the media gateway according to the gate control information, thus the media gateway controller is able to dynamically perform the complete gate control to the media streams on the media gateway.

To make the principle, features and merits of the disclosure clearer, the disclosure is described in details with reference to the specific embodiments.

According to the disclosure, a gate control method includes the following.

In Step S01, the media gateway controller sends, to the media gateway, the gate control information which is used to gate control the media streams of this media gateway.

In the disclosure, the media gateway controller (MGC), when performing gate control to media streams on the media gateway (MG), needs to issue the gate control information that mainly includes:

the media stream filtering rule which performs gate control to the media streams passing through the media gateway, and the following information that needed when performing filtering according to the media stream filtering rule: media stream source/destination address, source/destination port, and protocol type.

In step S02, the media gateway performs gate control to the corresponding media streams passing through the media gateway according to the gate control information.

The media gateway, after receiving the gate control information, may filter the corresponding media streams according to the media stream filtering rule and corresponding media stream source/destination address, source/destination port and protocol type information included in this gate control information, to perform the gate control. In specific implementation, the media stream filtering rule and the media stream source/destination address, source/ destination port and the protocol type information needed when performing the filtering according to the media stream filtering rule may be carried through Property parameters of the H.248 protocol or the MGCP protocol and sent to the media gateway by the media gateway controller. Taking the H.248 protocol as an example, the descriptors Local and Remote already existing in the H.248 protocol may, through the form of SDP, respectively provide the destination address, destination port and the protocol type of this media stream at the importing direction and the exporting direction, the Property parameters of Local may carry the destination address, destination port and the protocol type of the importing direction media stream in the media gateway, and the Property parameters of Remote may carry the destination address, destination port and the protocol type of the exporting direction media stream. In this embodiment, for the H.248 protocol it may also be extended to add Property parameters carrying the source address, source port of the importing direction media stream and the exporting direction media stream, as well as the media stream filtering rule which perform gate control to the media stream on the media gateway.

Specifically, in the embodiment, the three Property parameters extended in the H.248 protocol respectively represent the source address and source port of importing direction media stream, the source address and source port of exporting direction media stream, and the media stream filtering rule. It should be noted that those above Property parameters may be defined either in the existing packets or in new packets. For example, a new packet is named as IP Domain Connection, and the above three Property parameters are respectively named as Importing Source Address and Port, Exporting Source Address and Port, Media Stream Filtering Rule.

In specific implementation, the Property parameter of Importing/Exporting Source Address and Port in this embodiment is a string, which includes the importing/exporting source address and/or the source port information, and may be structured in the form of the combination of the host name or IP address, and port. By default, any component being absent may indicate an arbitrary value. In addition, for a certain component a wildcard "*" may be applied to indicate an arbitrary value, for example the Property parameter may take such values as MyHost:0909, 12.34.56.78:0909, MyHost, 12.34.56.78, :0909, 12.34.*.*, etc.

Further, in the disclosure, the Media Stream Filtering Rule may include the media gateway importing direction media stream filtering rule and the media gateway exporting direction media stream filtering rule. Specifically, the media gateway importing direction media stream filtering rule may include any combination of the following rules:
enabling or disabling filtering of the importing direction media streams according to the source address;
enabling or disabling filtering of the importing direction media streams according to the source port;
enabling or disabling filtering of the importing direction media streams according to the destination address;
enabling or disabling filtering of the importing direction media streams according to the destination port; and
enabling or disabling filtering of the importing direction media streams according to the protocol type.

Likewise, the media gateway exporting direction media stream filtering rule may include any combination of the following rules:
enabling or disabling filtering of the exporting direction media streams according to the source address;
enabling or disabling filtering of the exporting direction media streams according to the source port;
enabling or disabling filtering of the exporting direction media streams according to the destination address;
enabling or disabling filtering of the exporting direction media streams according to the destination port; and
enabling or disabling filtering of the exporting direction media streams according to the protocol type.

The combination relation among the rules may be either "AND" or "OR"; in addition, the filtering mode applied by the rules combination for gate control of the media streams may be enabling or disabling the passing through of the media streams conforming to the filtering rule.

In specific implementation, the Property parameter of Media Stream Filtering Rule in the disclosure carrying the media stream filtering rule information may be a word with double bytes; these two bytes respectively contain the media stream filtering rule of the importing direction and the exporting direction. As to each bit in every byte, one bit represents the filtering mode (Bit7 in this embodiment), with its value of 0 meaning that only the media streams conforming to the filtering rule is allowed to pass, and its value of 1 meaning that only the media streams conforming to the filtering rule is prohibited from passing; another one bit is used for representing the rule relation (Bit6 in this embodiment), with its value of 0 meaning that this direction related rules of this stream is "AND", and its value of 1 meaning that this direction related rules of the stream is "OR". The remaining bits indicate whether certain filtering rule are enabled, with value 0 meaning that the filtering rule is disabled and, with value 1 meaning that the filtering rule is enabled. The redundant bits may be reserved for future use. By fault this word is 0, meaning that no gate control is performed. Specifically, in this embodiment, the bits of the word may be defined as follows from low to high:
[Low bytes]
bit0: the importing direction media streams are filtered according to the source address
bit1: the importing direction media streams are filtered according to the source port
bit2: the importing direction media streams are filtered according to the destination address
bit3: the importing direction media streams are filtered according to the destination port
bit4: the importing direction media streams are filtered according to the protocol type
bit5: reserved
bit6: importing direction rules relation
bit7: importing direction media streams filtering mode
[High bytes]
bit0: the exporting direction media streams are filtered according to the source address
bit1: the exporting direction media streams are filtered according to the source port
bit2: the exporting direction media streams are filtered according to the destination address
bit3: the exporting direction media streams are filtered according to the destination port
bit4: the exporting direction media streams are filtered according to the protocol type
bit5: reserved
bit6: exporting direction rule relation
bit7: exporting direction media streams filtering mode.

To describe with a specific example, the Property parameter of Filtering Rule may take a value of 0000110011000011 in a binary form or OCC3 in a hexadecimal form, which means that media streams whose exporting direction conforms to both condition of the designated destination address and destination port is allowed to pass, whereas the media streams whose importing direction conforms to either condition of the designated source address or source port are prohibited from passing.

It should be noted that, in the disclosure, when the Property parameter of Filtering Rule issued by the MGC is unable to be implemented by the MG due to certain reason, in other words, the gate control fails, the MG needs to return the corresponding failure information to the MGC . The failure information in the disclosure may be sent to the MGC through the Error Code of the H.248 protocol or the MGCP protocol. For example, if certain media stream filtering rule to be enabled in the Property parameter sent to the media gateway by the MGC is not supported by the MG, the MG returns the Error Code currently defined in the H.248 protocol, which means not supporting certain parameter or property value. If certain filtering rule to be enabled in the Property parameter by MGC lacks necessary information support (for example, to enable the filtering of the importing direction according to the source address without providing the source address), the MG returns the Error Code newly defined by the extended H.248 protocol and the Error Code newly defined indicates lack of the related information.

Based on the above extended definition, the MGC, when it is not necessary to intervene in the gate control of media streams on the MG, may not send any Property parameter of Filtering Rule, and the MG, according to the Property parameter that is 0 by default, deems that the MGC requires no gate control. When the MGC needs to manage the gate control of media streams on the MG effectively, the MGC determines, regarding respectively the importing direction and the exporting direction, the filtering rule to be used and their combination relation (AND/OR), and the filtering mode (enabling /disabling the passing through), and the MGC sets, in the Property parameter of Filtering Rule, corresponding flag bits and then sends it to the MG. Further, the MGC also needs to send to the MG the related information of the filtering rule to be used, e.g. the source address, the source port, etc., before or at the same time of issuing the Property parameter of Filtering Rule. The MG, when obtaining the gate control instructions from the MGC, extracts the media stream filtering rule and the related information that is needed when performing filtering according to the filtering rule, and filters the corresponding media streams. During this process, the MG returns the corresponding Error Code to the MGC if any problems occur that causes the gate control aborted.

The above description is merely preferred embodiments of the disclosure and should not be construed as limiting the protection scope of the disclosure. Any modifications, equivalent alternatives, and improvements made within the principle of the disclosure shall fall into the protection scope of the claims of the disclosure.

## Claims

1. A gate control method of a media gateway, comprising:
receiving, gate control information for gate controlling media streams of a media gateway from a media gateway controller;
performing gate control to the media streams passing through the media gateway according to the gate control information.

2. The gate control method of the media gateway according to claim 1, wherein the gate control information comprises a media stream filtering rule for performing gate control to the media streams passing through the media gateway, and a media stream source/destination address, a source/destination port and protocol type information needed when performing filtering according to the media stream filtering rule.

3. The gate control method of the media gateway according to claim 2, wherein the media stream filtering rule comprises a media gateway importing direction media stream filtering rule and/or a media gateway exporting direction media stream filtering rule.

4. The gate control method of the media gateway according to claim 3, wherein the media gateway importing direction media stream filtering rule comprises at least one of the following rules:
enabling or disabling filtering of the importing direction media streams according to the source address;
enabling or disabling filtering of the importing direction media streams according to the source port;
enabling or disabling filtering of the importing direction media streams according to the destination address;
enabling or disabling filtering of the importing direction media streams according to the destination port; and
enabling or disabling filtering of the importing direction media streams according to the protocol type.

5. The gate control method of the media gateway according to claim 3, wherein the media gateway exporting direction media stream filtering rule comprises at least one of the following rules:
enabling or disabling filtering of the exporting direction media streams according to the source address;
enabling or disabling filtering of the exporting direction media streams according to the source port;
enabling or disabling filtering of the exporting direction media streams according to the destination address;
enabling or disabling filtering of the exporting direction media streams according to the destination port; and
enabling or disabling filtering of the exporting direction media streams according to the protocol type.

6. The gate control method of the media gateway according to claim 4 or 5, wherein a relation of the combination of the respective rules is either "AND" or "OR".

7. The gate control method of the media gateway according to claim 4 or 5, wherein a filtering mode of the combination of the rules for performing the gate control of the media stream is to enable the media stream conforming to the combination of the filtering rules to pass or disable the media stream conforming to the combination of the filtering rules from passing.

8. The gate control method of the media gateway according to claim 2, wherein the media stream filtering rule and the media stream source/destination address, source /destination port and protocol type information needed when performing filtering according to the media stream filtering rule are carried by Property parameters of the H.248 protocol or the MGCP protocol and sent to the media gateway by the media gateway controller.

9. The gate control method of the media gateway according to claim 1, further comprising:
returning failure information, by the media gateway, to the media gateway controller if the gate control performed to the media stream on the media gateway fails.

10. The gate control method of the media gateway according to claim 9, wherein returning failure information to the media gateway controller comprises:
returning the failure information to the media gateway controller through the Error Code of the H.248 protocol or the MGCP protocol.
